# EUROPÄISCHE PATENTSCHRIFT

(11) **EP 0 503 310 B1**
(45) Veröffentlichungstag und Bekanntmachung des Hinweises auf die Patenterteilung: **12.10.1994**
(21) Anmeldenummer: 92102520.1
(22) Anmeldetag: 14.02.1992
(51) Int. Cl.: B60R 9/058

(54) **Stützfuss für Dachgepäckträger**
Roof rack support foot
Pied d'appui pour galerie de toit

(30) Priorität: 14.03.1991 DE 4108302
(43) Veröffentlichungstag der Anmeldung: 16.09.1992
(73) Patentinhaber: silvretta-sherpas Sportartikel GmbH, D-85757 Karlsfeld (DE)
(72) Erfinder: Eugler, Norbert, W-8047 Karlsfeld (DE)
(74) Vertreter: Zmyj, Erwin, Dipl.-Ing., Dipl.-Wirtsch.-Ing.

(56) Entgegenhaltungen:
- EP-A- 0 278 435
- DE-A- 3 841 188

## Beschreibung

Die Erfindung bezieht sich auf einen Stützfuß für Dachgepäckträger nach dem Oberbegriff des Anspruchs 1.

Ein Stützfuß dieser Art ist aus der DE 38 41 188 A1 bekannt. Bei der Ausbildung der Klemmeinrichtung mit einem lotrecht verschiebbar angeordneten Schieber zur Erzielung einer klemmenden Haltewirkung zwischen der Stützplatte und dem Bolzen, befindet sich die zur Verschiebung des Schiebers vorgesehene Schraube und die Stellmutter außerhalb des von der Fahrzeugtür abgedeckten Bereiches. Hierdurch ist es notwendig eine zusätzliche absperrbare Schutzkappe für die Verstellmutter vorzusehen, um ein unbefugtes Lösen des Stützfußes zu verhindern.

Aufgabe der Erfindung ist es, eine zusätzliche absperrbare Schutzkappe zu vermeiden.

Diese Aufgabe wird durch die im Anspruch 1 angegebenen Merkmale gelöst.

Durch die Verwendung einer an der Stützplatte festgelegte Mutter in Verbindung einer Schraube, die als Madenschraube mit Innensechskant ausgebildet sein kann, ist eine äußerst gedrängte Ausgestaltung der Klemmeinrichtung möglich, die aufgrund dieses geringen Platzbedarfes und aufgrund der Tatsache, daß die Schraube gegenüber der Öffnungsrichtung der Ausnehmung geneigt ist, innerhalb desjenigen Bereiches angeordnet werden kann, der von der Tür abgedeckt wird. Auf diese Weise ist eine zusätzliche Sicherung der Klemmeinrichtung nicht erforderlich.

Um den vorhandenen Raum zwischen Karosseriekörper und Tür ausnutzen zu können, sind die Mutter und die Schraube teilweise in einer Durchbrechung der Stützplatte angeordnet, wobei die Mutter nur wenig über die Stützplatte an der dem Fahrzeug zugewandten Seite hervorsteht, da nach dieser Seite hin wesentlich weniger Platz zur Verfügung steht. Zur Tür hin ist der vorhandenene Raum etwas größer bemessen, so daß die Mutter und die Schraube zum größeren Teil über die Platte in Richtung zur Tür hervorstehen.

Bei einem Stützfuß mit zwei Ausnehmungen in der Stützplatte, die sowohl nach unten als auch gleichgerichtet in oder gegen die Fahrtrichtung offen sind, empfiehlt es sich, daß die Schraube die offene Seite des in bzw. gegen die Fahrtrichtung offenen Teils einer Ausnehmung sperrt, d. h. durch die Abstützung der Schraube gegen den Bolzen im wesentlichen aus der offenen Richtung her, wird das geschlossene Ende der Ausnehmung und somit die Stützplatte gegen den Bolzen gedrückt.

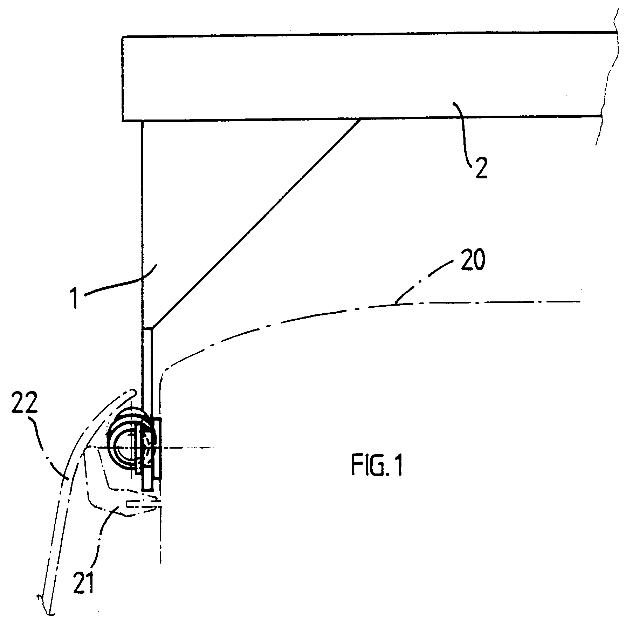

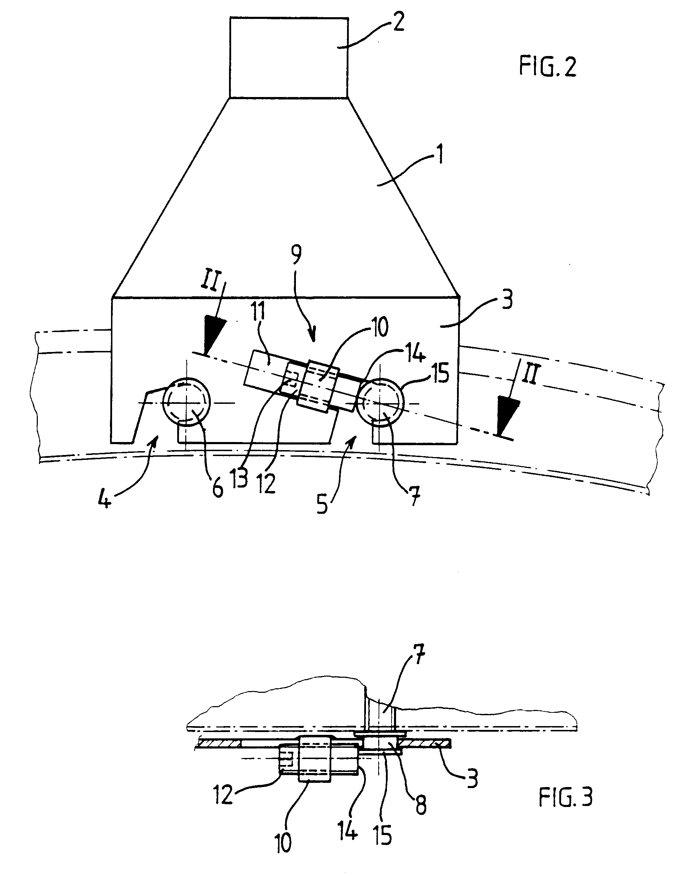

Die Erfindung wird anhand eines in der Zeichnung dargestellten Ausführungsbeispieles näher erläutert. In der Zeichnung zeigen:
- Figur 1:: eine Teilansicht eines Tragholmes eines Dachgepäckträgers mit an einem karosseriefesten Bolzen angeordneten Stützfuß;
- Figur 2:: eine Seitenansicht des Tragholmes nach Figur 1;
- Figur 3:: einen Schnitt nach der Linie II-II in Figur 2;
An einem sogenannten Grundträger, der einen das Fahrzeugdach 20 quer zur Fahrtrichtung überspannenden Tragholm 2 umfaßt, sind an den Enden Stützfüße 1 angebracht, von denen einer in den Figuren 1 und 2 gezeigt ist. Der Stützfuß 1, der an seinem einen Ende am Tragholm 2 befestigt ist, weist eine Stützplatte 3 auf, welche zwei Ausnehmungen 4 und 5 an ihrem unteren freien Rand aufweist. Diese Ausnehmungen 4 und 5 dienen dazu, den Stützfuß an zwei karosseriefesten Bolzen 6 und 7 festzulegen. Diese Bolzen sind im Bereich des Dachholms mit der Karosserie oberhalb der Türdichtung 21 fest verbunden und werden von der Tür 22 in deren geschlossem Zustand überdeckt. Die Bolzen 6 und 7 sind untereinander gleich ausgeführt und weisen jeweils eine Umfangsnut 8 auf, in die der Stützfuß mit der Stützplatte 3 aufgenommen ist.

Die Ausnehmungen 4 und 5 sind sowohl nach unten als auch gleichgerichtet in eine Richtung, beispielsweise in Fahrtrichtung des Fahrzeuges offen, so daß sich hierdurch abgeknickte Ausnehmungen ergeben, wodurch in der festgelegten Betriebslage die Bolzen 6 und 7 auf etwa drei Viertel ihres Umfanges von einer festen Begrenzung der jeweiligen Ausnehmungen umgeben sind. Der Stützfuß ruht somit auf dem Bolzen in der Nut 8 auf und ist auch gegen ein Abheben gesichert, sofern gewährleistet ist, daß sich der Stützfuß nicht in den Ausnehmungen in Richtung auf das offene Ende verschieben kann, wofür zunächst eine horizontale und dann eine vertikale Bewegung notwendig ist.

Um eine solche Bewegung des Stützfußes zu verhindern und ein sicheres Anliegen desselben an den Bolzen 6 und 7 zu gewährleisten, ist eine Klemmeinrichtung vorgesehen, die insgesamt mit 9 bezeichnet ist. Diese Klemmeinrichtung umfaßt eine Mutter 10, die im Bereich einer breiten Durchbrechung 11 der Stützplatte 3 an dieser festgegelegt ist und in die Durchbrechung 11 soweit eingreift, daß sie auf der der Fahrzeugseite zugewandten Seite geringfügig über die Stützplatte 3 hervorsteht. Auf diese Weise liegt eine in die Mutter 10 einschraubbare und als Madenschraube ausgeführte Schraube 12, die einen Innensechskant 13 aufweist, geringfügig innerhalb der Durchbrechung 11 und stützt sich mit ihrem einen Ende 14 an einem die Nut 8 nach außen begrenzenden flanschartigen Ansatz 15 ab, um die Stützplatte 3 gegenüber den Bolzen 6 und 7 festzuklemmen. Durch das Anziehen der Schraube 12 wird nämlich die Stützplatte 3 mit den Begrenzungen der Ausnehmungen 4 und 5 gegen die Bolzen 6 und 7 gedrückt, so daß die Bolzen nahezu auf drei Viertel des Umfanges formschlüssig von der Stützplatte 3 umgeben sind. Die Schraube 12 ist so ausgeführt, daß sie nicht vollständig aus der Mutter 10 herausgeschraubt werden kann, um ein Verlieren der Schraube zu vermeiden. Die Anordnung der Durchbrechung 11 und der Schraube 12 erfolgt unter einem Winkel von etwa 25 bis 30° gegenüber der Horitzontalen, wodurch die Schraube 12 den Bolzen 7 an einem Austritt aus der offenen Seite der Ausnehmung 5 hindert. Die Schraube 12 sperrt somit die offene Seite dieser Ausnehmung.

## Patentansprüche

1. Stützfuß (1) für Dachgepäckträger mit an einem Ende angeordneter Stützplatte (3), die an einem freien Rand mindestens eine zum Rand hin offene Ausnehmung (4,5) aufweist, mit der die Stützplatte (3) jeweils an einem zur Befestigung dienenden, die Ausnehmung (4,5) durch setzenden, karosseriefesten Bolzen (6,7) festlegbar ist, an dem die Stützplatte (3) durch eine am Bolzen (6,7) angreifende Klemmeinrichtung (9) festklemmbar ist, **dadurch gekennzeichnet,** daß die Klemmeinrichtung (9) eine an der Stützplatte (3) festgelegte Mutter (10) und eine die Mutter durchsetzende und gegen den Bolzen (7) andrückbare Schraube (12) umfaßt, die gegen eine Öffnungsrichtung der Ausnehmung (5) geneigt und, im wesentlichen parallel zur Stützplattenebene, in dem von der Fahrzeugtür überdeckten Bereich angeordnet ist.

2. Stützfuß nach Anspruch 1, dadurch gekennzeichnet, daß die Mutter (10) und die Schraube (12) teilweise in einer Durchbrechung (11) der Stützplatte (3) angeordnet sind, wobei die Mutter (10) nur wenig über die Stützplatte (3) an der dem Fahrzeug zugewandten Seite hervorsteht.

3. Stützfuß (1) nach Anspruch 1 oder 2, mit zwei Ausnehmungen (4,5) in der Stützplatte (3), die sowohl nach unten als auch gleichgerichtet in oder gegen die Fahrtrichtung offen sind, dadurch gekennzeichnet, daß die Schraube (12) die offene Seite des in bzw. gegen die Fahrtrichtung offenen Teils einer Ausnehmung (5) sperrt.

## Claims

1. Roof rack support foot (1), comprising a support plate (3) which is arranged at one end and is provided at one free edge with at least one recess (4, 5) open towards the edge, by means of which the support plate (3) can be fixed to a bolt (6, 7) which is fixed to the vehicle body, traverses the recess (4, 5) and serves for securing, and to which the support plate (3) can be clamped by means of a clamping device (9) engaging the bolt (6, 7), characterised in that the clamping device (9) includes a nut (10) fixed to the support plate (3) and a screw (12) which traverses the nut and can be pressed against the bolt (7), said screw being inclined in an opening direction of the recess (5) and being arranged substantially parallel to the plane of the support plate in the region covered by the vehicle door.

2. Support foot according to claim 1, characterised in that the nut (10) and the screw (12) are partly arranged in an opening (11) in the support plate (3), the nut (10) projecting only a little beyond the support plate (3) at the side directed towards the vehicle.

3. Support foot (1) according to claim 1 or claim 2, comprising two recesses (4, 5) in the support plate (3) which are open both towards the bottom and in parallel in or against the direction of travel, characterised in that the screw (12) blocks the open side of the part of the recess (5) open in or against the direction of travel.

## Revendications

1. Pied d'appui (1) pour galerie porte-bagages comportant une plaque d'appui (3) située à une extrémité, qui présente sur un bord libre au moins une échancrure (4, 5) ouverte vers le bord, avec laquelle la plaque d'appui (3) peut être fixée à chaque fois au boulon (6, 7), servant a la fixation, traversant l'échancrure (4, 5), et étant solidaire de la carrosserie, contre lequel la plaque d'appui (3) peut être bloquée par un dispositif de blocage (9) agissant sur le boulon (6,7), caractérisé en ce que le dispositif de blocage (9) comprend un écrou (10) fixé sur la plaque d'appui (3) et une vis (12) traversant l'écrou et pouvant venir en pression contre le boulon (7), cette vis étant inclinée vers l'ouverture de l'échancrure (5) et étant disposée sensiblement parallèlement au plan de la plaque d'appui, dans la zone recouverte par la portière du véhicule.

2. Pied d'appui (1) selon la revendication 1, caractérisé en ce que l'écrou (10) et la vis (12) sont disposés en partie dans une découpure (11) de la plaque d'appui (3), l'écrou (10) ne dépassant que légèrement de la plaque d'appui (3) du côté tourné vers le véhicule.

3. Pied d'appui (1) selon la revendication 1 ou 2, avec deux échancrures (4,5) dans la plaque d'appui (3), qui sont ouvertes aussi bien vers le bas que dirigées dans le même sens ou contre le sens de déplacement, caractérisé en ce que la vis (12) bouche le côté ouvert de la partie ouverte d'une échancrure (5) dans le sens du déplacement ou dans le sens opposé.
